Europäisches Patentamt

European Patent Office

Office européen des brevets

(19)

(11) **EP 1 296 460 B1**

(12) **FASCICULE DE BREVET EUROPEEN**

(45) Date de publication et mention
de la délivrance du brevet:
**19.04.2006 Bulletin 2006/16**

(51) Int Cl.:
*H04B 1/707* (2006.01)   *H04L 25/02* (2006.01)

(21) Numéro de dépôt: **01122582.8**

(22) Date de dépôt: **25.09.2001**

(54) **Procédé et dispositif de détermination des coefficients d'évanouissement des trajets d'un canal de transmission multi-trajets reliant en particulier une station de base et un téléphone mobile cellulaire**

Verfahren und Vorrichtung zur Bestimmung der Signalschwundkoeffizienten in einem Mehrwegübertragungskanal, der insbesondere eine Basisstation und ein Mobiltelefon verbindet

Method and apparatus for determining the fading coefficients of a multipath transmission channel connecting in particular a base station and a mobile telephone

(84) Etats contractants désignés:
**DE FR GB IT**

(43) Date de publication de la demande:
**26.03.2003 Bulletin 2003/13**

(73) Titulaire: **STMicroelectronics N.V.**
**1077 XX Amsterdam (NL)**

(72) Inventeur: **Bonhomme, Corinne**
**01630 Sergy (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
- **BALTERSEE J ET AL: "Performance analysis of phasor estimation algorithms for a FDD-UMTS RAKE receiver" 2000 IEEE SIXTH INTERNATIONAL SYMPOSIUM ON SPREAD SPECTRUM TECHNIQUES AND APPLICATIONS. ISSTA 2000. PROCEEDINGS (CAT. NO. 00TH8536), PROCEEDINGS OF INTERNATIONAL IEEE SYMPOSIUM ON SPREAD SPECTRUM TECHNIQUES AND APPLICATIONS (6TH ISSSTA), PARSIPPANY, N, pages 476-480 vol.2, XP002192516 2000, Piscataway, NJ, USA, IEEE, USA ISBN: 0-7803-6560-7**
- **CHAUFRAY J -M ET AL: "Consistent estimation of Rayleigh fading channel second order statistics in the context of the wideband CDMA mode of the UMTS" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, pages 2189-2192 vol.4, XP002192517 2001, Piscataway, NJ, USA, IEEE, USA ISBN: 0-7803-7041-4**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 296 460 B1

## Description

L'invention concerne d'une façon générale les systèmes de communication sans fil, notamment ceux destinés à fonctionner selon la norme UMTS.

Dans un système de communication sans fil, une station de base communique avec une pluralité de terminaux distants, tels que des téléphones mobiles cellulaires. Les accès multiples par division de fréquence (FDMA : "Fréquency-Division Multiple Access" en langue anglaise) et les accès multiples par division temporelle (TDMA "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spreaded " en langue anglaise) par la station de base en utilisant le code d'embrouillage de la station de base et le code OVSF du terminal distant.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA, et plus particulièrement aux systèmes du type CDMA-FDD.

Ceci étant, l'invention s'applique également aux systèmes de communication du type FDMA et TDMA, en particulier aux téléphones GSM et GPRS, et plus généralement aux terminaux utilisant une réception cohérente et en particulier ceux fonctionnant selon la norme UMTS qui doivent être capables par exemple de fonctionner à la fois sous un système CDMA, comme le système WCDMA, et sous un système FDMA et TDMA.

Généralement, dans les systèmes UMTS, on utilise un récepteur communément désigné par l'homme du métier « récepteur Rake ». Ce récepteur est utilisé pour effectuer l'alignement temporel, le désembrouillage, le désétalement et la combinaison des versions retardées du signal initialement transmis par la station de base. Ces versions sont le résultat des caractéristiques de transmission multi-trajets du milieu de transmission. Et, chaque trajet introduit un retard différent.

Le récepteur Rake possède de façon classique un certain nombre de doigts ou « fingers » en langue anglaise, correspondant respectivement aux différents trajets du milieu de transmission. Le récepteur Rake doit recevoir à son entrée les valeurs des différents retards de chaque trajet et également la valeur des coefficients d'évanouissement (« fading ») des trajets du canal de transmission.

L'invention concerne plus particulièrement la détermination des coefficients d'évanouissement des trajets du canal de transmission multi-trajets, c'est-à-dire puisque ces coefficients sont des coefficients complexes, la détermination de l'amplitude et de la phase de l'évanouissement de chaque trajet. Cette détermination fait partie de l'estimation de canal.

Dans le cadre de l'estimation de canal, qui est nécessaire pour toute réception cohérente comme c'est le cas pour la norme UMTS, on estime à chaque intervalle temporel (« slot ») composant une trame de transmission, et pour chaque doigt du récepteur Rake, c'est-à-dire pour chaque trajet, la phase et l'amplitude de l'évanouissement. (« fading »).

Parmi les solutions connues d'estimation de ces paramètres, on peut rappeler la méthode qui consiste en une simple corrélation du signal reçu avec le produit du code d'étalement et d'embrouillage. Cependant, une telle méthode est très sous-optimale, car elle n'utilise pas les observations passées du signal.

Parmi les méthodes optimales, on peut citer la méthode de Wiener, bien connue de l'homme du métier. Cette méthode de Wiener consiste à filtrer les estimations au sens du maximum de vraisemblance par un filtre de Wiener. Ce filtre est construit à partir de l'inversion de la matrice de corrélation du signal. Cette méthode suppose par ailleurs la connaissance des bits émis. Cependant, cette méthode, bien qu'optimale en termes de performance, reste extrêmement complexe à mettre en oeuvre. Une telle méthode est décrite dans J. Baltersee et Al., "Performance Analysis of Phasor Estimation Algorithms for a FDD-UMTS RAKE Receiver", IEEE 6th Int. Symp. on Spread-Spectrum Tech. Appl., NJIT, New Jersey, USA, Sept. 6-8 2000, p. 476-480.

L'invention vise à apporter une solution à ce problème.

Un but de l'invention est de proposer une détermination des coefficients d'évanouissement qui soit à la fois stable et moins complexe à mettre en oeuvre que la méthode de Wiener.

Pour cela, l'invention propose d'adapter la méthode de Wiener en réduisant la recherche d'un ensemble infini de filtres à un ensemble fini.

L'invention propose donc un procédé de détermination des coefficients d'évanouissement d'un trajet d'un canal de transmission multi-trajets reliant une station de base et un terminal mobile, par exemple un téléphone mobile cellulaire.

Selon une caractéristique générale de l'invention, le procédé comprend une détermination de premières valeurs d'estimation desdits coefficients d'évanouissement au sens du maximum de vraisemblance. Par ailleurs, plusieurs jeux de coefficients d'un filtre de Wiener sont mémorisés. Les jeux de coefficients sont respectivement précalculés pour plusieurs jeux de valeurs prédéterminées différentes de vitesse de déplacement du terminal mobile et de puissance du signal en utilisant une fonction d'autocorrélation supposée connue des coefficients d'évanouissement.

Par ailleurs, on estime la vitesse de déplacement du mobile et la puissance du signal de chaque trajet. On effectue alors une sélection pour chaque trajet d'un jeu de coefficients précalculés de filtre de Wiener à partir du résultat de la comparaison entre la vitesse de déplacement et la puissance du signal estimées d'une part, et les jeux de valeurs prédéterminées, de vitesse de déplacement et de puissance de signal d'autre part.

On détermine alors les coefficients d'évanouissement par un filtrage des premières valeurs d'estimation correspondantes, ce filtrage utilisant les jeux sélectionnés de coefficients de Wiener précalculés.

Ainsi, selon l'invention, le fait d'utiliser une fonction d'autocorrélation supposée connue pour les coefficients d'évanouissement, par exemple une fonction utilisant un modèle de Jake qui est un modèle d'autocorrélation généralement adopté dans le cas de propagation en milieu urbain et qui fait intervenir notamment une fonction de Bessel du premier type d'ordre zéro, on observe alors que le filtre ainsi obtenu dépend uniquement de la vitesse de déplacement du mobile et de la puissance du signal reçu. Les filtres vont donc être précalculés et tabulés en fonction de ces deux paramètres (puissance et vitesse).

Ainsi, le fait de précalculer une fois pour toutes les filtres réduit considérablement la complexité d'implémentation puisque les coefficients des filtres sont stockés une fois pour toutes dans une mémoire. Par ailleurs, les filtres ainsi calculés proviennent d'un système stable, donc ont de bonnes caractéristiques et ils sont par ailleurs très proches d'une version optimale.

En outre, l'invention évite d'effectuer en temps réel une inversion de matrice qui est toujours une opération très délicate. Par ailleurs, les propriétés de cette matrice font que si on l'estime à chaque intervalle du fait de la présence du bruit, le système peut devenir instable.

Finalement, on choisit selon l'invention le filtre le plus proche en fonction de deux critères (puissance du signal (rapport signal/bruit) et vitesse)), puis on filtre les estimations obtenues au sens du maximum de vraisemblance. La complexité de l'invention est donc réduite à une recherche des coefficients du filtre le plus approprié et au filtrage associé.

Selon un mode de mise en oeuvre de l'invention, la détermination des premières valeurs d'estimation des coefficients d'évanouissèment au sens du maximum de vraisemblance peut être obtenue en multipliant les signaux issus des différents trajets par le conjugué complexe d'un symbole connu, par exemple les symboles véhiculés par un canal commun connu de l'homme du métier sous la dénomination CPICH dans le cas d'une transmission WCDMA-FDD (« downlink »), c'est-à-dire dans le sens descendant depuis la station de base vers le téléphone.

L'utilisation d'un tel canal est particulièrement avantageuse car celui-ci n'est pas modulé et tous les symboles sont les mêmes.

Lorsque, comme c'est le cas dans les systèmes WCDMA, les informations véhiculées sur le canal de transmission sont formées de fragments (« chips » en langue anglaise) et sont véhiculées au train de trames successives subdivisées chacune en un nombre prédéterminé d'intervalles (« slots » en langue anglaise), la détermination des premières valeurs d'estimation des coefficients d'évanouissement comporte une estimation de ces premières valeurs sur un nombre prédéterminé de fragments de chaque intervalle. En effet, il n'est pas nécessaire de déterminer ces premières valeurs d'estimation sur chaque fragment, car au niveau fragment la variation de l'évanouissement est minime. Dans ces conditions, il est préférable d'estimer ces premières valeurs d'estimation des coefficients d'évanouissement sur un certain nombre de fragments (256, 512 ou 2560). Ainsi, pour chaque intervalle, on obtiendra un certain nombre de premières valeurs d'estimation, par exemple cinq.

L'invention a également pour objet un dispositif d'estimation des coefficients d'évanouissement des trajets d'un canal de transmission multi-trajets reliant une station de base et un terminal mobile.

Selon une caractéristique générale de l'invention, ce dispositif comprend :

- des premiers moyens de calcul aptes à déterminer des premières valeurs d'estimation desdits coefficients d'évanouisserrient au sens du maximum de vraisemblance,

- une mémoire contenant plusieurs jeux de coefficients d'un filtre de Wiener respectivement précalculés pour plusieurs jeux de valeurs prédéterminées différentes des vitesses de déplacement du terminal mobile et des puissances de signal en utilisant une fonction d'autocorrélation supposée connue des coefficients d'évanouissement,
- des premiers moyens d'estimation aptes à estimer la vitesse de déplacement du mobile,
- des deuxièmes moyens d'estimation aptes à estimer la puissance du signal de chaque trajet,
- des moyens de sélection aptes à sélectionner pour chaque trajet un jeu de coefficients précalculés de filtres de Wiener, à partir du résultat de la comparaison entre la vitesse de déplacement et la puissance de signal estimée d'une part, et les jeux de valeurs prédéterminées de vitesse de déplacement et de puissance de signal d'autre part, et
- des deuxièmes moyens de calcul aptes à déterminer les coefficients d'évanouissement par un filtrage des premières valeurs d'estimation correspondantes, ce filtrage utilisant les jeux sélectionnés de coefficients de Wiener précalculés.

De façon à effectuer une détermination au sens du maximum de vraisemblance, les premiers moyens de calcul comportent des moyens de multiplication aptes à multiplier les signaux issus des différents trajets par le conjugué complexe d'un symbole connu.

Lorsque les informations véhiculées sur le canal de transmission sont formées de fragments et sont véhiculées au sein de trames successives subdivisées chacune en un nombre prédéterminé d'intervalles, les premiers moyens de calcul comportent avantageusement les troisièmes moyens d'estimation aptes à estimer ces, premières valeurs sur un nombre prédéterminé de fragments de chaque intervalle.

L'invention a également pour objet un terminal mobile, par exemple un téléphone mobile cellulaire, incorporant un dispositif de détermination des coefficients d'évanouissement tels que définis ci-avant.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre de façon schématique une architecture de principe d'un téléphone mobile cellulaire selon l'invention, incorporant un dispositif de détermination de coefficients d'évanouissement selon l'invention ;
- la figure 2 illustre plus en détail mais toujours de façon schématique une architecture interne d'un dispositif de détermination de coefficients d'évanouissement selon l'invention ;
- la figure 3 représente de façon schématique un organigramme d'un mode de mise en oeuvre d'un procédé selon l'invention ; et
- la figure 4 illustre de façon schématique un autre mode de réalisation et de mise en oeuvre d'un dispositif selon l'invention, permettant plus particulièrement une première estimation des coefficients d'évanouissement au sens du maximum de vraisemblance.

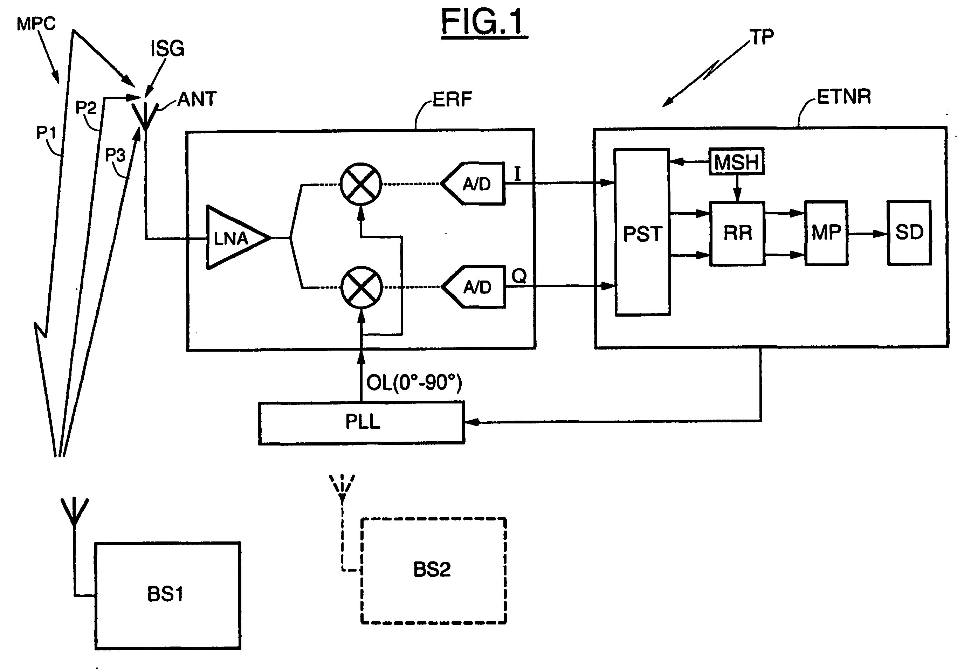

Sur la figure 1, la référence TP désigne un terminal distant, tel qu'un téléphone mobile cellulaire, qui est en communication avec une station de base BS1, par exemple selon un schéma de communication du type CDMA-FDD.

Le téléphone mobile cellulaire comprend, de façon classique, un étage analogique radiofréquence ERF connecté à une antenne ANT pour recevoir un signal d'entrée ISG.

Classiquement, l'étage ERF comprend un amplificateur faible bruit LNA et deux voies de traitement comportant des mélangeurs, des filtres et amplificateurs classiques (non représentés sur la figure 1 à des fins de simplification). Les deux mélangeurs reçoivent respectivement de la part d'une boucle à verrouillage de phase PLL deux signaux présentant mutuellement une différence de phase de 90˚. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 1). En conséquence, le signal ISG qui est reçu par le téléphone mobile comporte différentes versions temporellement retardées du signal initialement transmis, versions qui sont le résultat des caractéristiques de transmission multi-trajets du milieu de transmission. Et, chaque trajet introduit un retard différent.

L'étage de traitement ETNR comporte un dispositif PST de détermination des coefficients d'évanouissement des trajets du canal de transmission multi-trajets.

Les différents retards temporels $\tau$ des différents trajets du canal multi-trajets sont estimés par une unité de recherche MSH et peuvent être continuellement suivis par exemple par une boucle à verrouillage numérique.

La structure d'une unité de recherche et d'une unité de suivi sont bien connues de l'homme du métier. Brièvement, les multi-trajets qui arrivent à l'unité de recherche conduisent à l'obtention de pics de corrélation se produisant à différents instants. L'amplitude d'un pic est proportionnel à l'enveloppe du signal du trajet, et l'instant de chaque pic, relativement à la première arrivée, donne une mesure du retard du trajet correspondant. Les informations sur ces retards, qui fournissent également le nombre de doigts du récepteur Rake, sont délivrées par l'unité MSH au récepteur Rake RR, ainsi qu'au dispositif d'estimation selon l'invention PST.

Le récepteur Rake RR, qui équipe un téléphone mobile cellulaire fonctionnant dans un système de communication CDMA, est utilisé pour effectuer l'alignement temporel, le désembrouillage, le désétalement et la combinaison des versions retardées du signal initialement transmis, de façon à délivrer les flux d'informations contenus dans le signal initial. Bien entendu, le signal reçu ISG pourrait également résulter de la transmission de signaux initiaux respectivement émis par différentes stations de base BS1 et BS2.

Le récepteur Rake RR est suivi par des moyens classiques de démodulation MP qui effectuent la démodulation de la constellation délivrée par le récepteur Rake RR.

L'étage de traitement ETNR comprend également de façon classique un décodeur de source SD qui effectue un décodage de source bien connu par l'homme du métier.

Enfin, comme il est également bien connu par l'homme du métier, la boucle à verrouillage de phase PLL est commandée par un algorithme de contrôle automatique de fréquence incorporé dans un processeur de l'étage ETNR.

Ainsi qu'il est bien connu de l'homme du métier, avant transmission via l'antenne de la station de base BS1, le signal initial contenant les informations (symboles) est embrouillé ("scrambled" en langue anglaise) et étalé ("spreaded") par des moyens de traitement de la station de base, en utilisant le code d'embrouillage ("'scrambling code") de la station de base et le code orthogonal (code OVSF) du téléphone TP.

En conséquence, les symboles sont transformés en fragments ("chips" en langue anglaise) ayant une longueur prédéterminée (par exemple égale à 260 ns), et correspondant à un taux de fragments prédéterminé (chip rate) égal par exemple à 3,84 Mcps. Ainsi, le taux de fragments (chip rate) est plus grand que le taux de symboles (symbol rate).

Ainsi, un symbole peut être transformé en un nombre de fragments pouvant aller de 4 à 256.

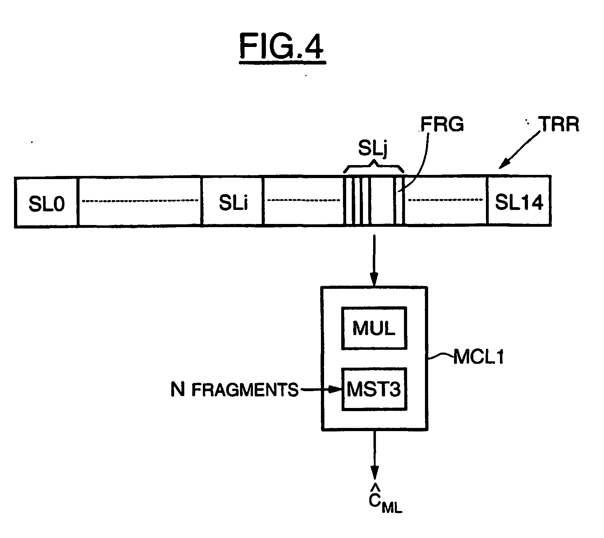

Comme illustré sur la figure 4, les informations émises par la station de base et formées de fragments, sont véhiculées au sein de trames successives TRR subdivisées chacune en un nombre prédéterminé d'intervalles ("slots" en langue anglaise) SLi. A titre indicatif, chaque trame TRR, ayant une longueur de 10 ms, est subdivisée en quinze intervalles SL0-SL14, chaque intervalle ayant une longueur égale à 2560 fragments.

Les informations reçues par le téléphone et émanant de la station de base, comportent des données proprement dites véhiculées sur un canal de données DPDCH, et des indications de contrôle véhiculées sur un canal de contrôle DPCCH. Dans le sens descendant ("downlink" en langue anglaise), chaque intervalle temporel SLi de la trame TRR contient de façon imbriquée des données et des indications de contrôle. Ceci est parfaitement connu de l'homme du métier.

Dans le sens descendant, il est prévu également un canal commun de pilote (CPICH) qui utilise un facteur d'étalement de 256 et qui transmet continuellement des symboles pilote. Dans le sens montant, les symboles pilote ne sont uniquement contenus que dans le canal de contrôle DPCCH.

Dans le système CDMA-FDD, le canal CPICH est un canal descendant ayant un débit fixé et véhiculant des séquences de symboles connus prédéfinies. Ce canal est par ailleurs non modulé.

Le dispositif de détermination PST selon l'invention va déterminer les coefficients d'évanouissement associés aux différents trajets, c'est-à-dire qu'il va effectuer une estimation de canal. Ces coefficients d'évanouissement seront ensuite communiqués au récepteur Rake RR.

Dans un système de transmission CDMA, que l'on considère ici à titre d'exemple non limitatif, les données utilisateur $a_k$ sont suréchantillonnées par un facteur d'étalement Nc et ensuite multipliées par un facteur d'étalement utilisateur d qui est un vecteur de Nc composantes $d_v$.

Le signal reçu peut s'écrire conformément à la formule (1) :

$$r(t) = \sum_{l=0}^{N_p-1} c_l(t) \sum_n a_n \sum_{v=0}^{N_c-1} d_v g_T(t - nT - vT_c - \tau_l) + m(t) \qquad (1)$$

dans laquelle

$g_T(t)$: réponse impulsionnelle du filtre d'émission

$N_p$ : nombre de trajets

$\tau_l$: retard associé au 1ème trajet

$m(t)$ : bruit (supposé être sensiblement blanc)

$c_l(t)$ : coefficient d'évanouissement du 1ème trajet

$T$ : durée d'un symbole

$T_c$: durée d'un fragment

Partant de cette formule, le signal reçu dans le $1^{\text{ième}}$ doigt après filtrage par le filtre adapté de réception, interpolation et décimation à la fréquence des fragments, s'écrit conformément à la formule (2) ci-dessous :

$$z_{l;k} = a_n \sum_{v=0}^{N_c-1} c_{l;k} d_v g\,(t - nT - vT_c - \dot{\tau}_l) + m_{l;k} \qquad (2)$$

Après filtrage dans un filtre en forme d'impulsion et après désétalement, le résultat y est défini par la formule (3) ci-dessous :

$$y_{l;n} = \sum_{k=nNc}^{(n+1)Nc-1} d_{k \bmod Nc} z_{l;k} + m_{l;k}$$
$$= a_n c_{l;n} + m_{l;n} \qquad (3)$$

dans laquelle $C_{1;n}$ est le coefficient d'évanouissement à l'instant n associé au doigt l

Il est alors connu de l'homme du métier que la détermination optimale $\hat{c}$ des coefficients d'évanouissement est obtenue en filtrant des estimations $\hat{c}_{ML}$ obtenues au sens du maximum de vraisemblance, par un filtre de Wiener W conformément à la formule (4) ci-dessous :

$$\hat{c} = w^H * \hat{c}_{ML} \qquad (4)$$

La formule (4) se traduit matriciellement et vectoriellement par la formule (5) ci-dessous :

$$\hat{c}_n = c_D^H . (C_D + N0.I)^{-1} \begin{pmatrix} \hat{c}_{ML,n-N_w+P} \\ . \\ . \\ . \\ \hat{c}_{ML,n-1+P} \end{pmatrix} \qquad (5)$$

dans laquelle $C_D$ désigne la matrice d'autocorrélation des coefficients du canal et $C_D$ désigne le vecteur des échantillons d'autocorrélation des coefficients du canal. $C_D$ et $c_D$ sont définis par les formules (6) et (7) ci-dessous :

$$C_D = \rho \begin{pmatrix} \alpha(0) & . & . & . & \alpha(N_w-1) \\ . & . & & . \\ . & & . & . \\ . & & . & . \\ \alpha(N_w-1) & . & . & . & \alpha(0) \end{pmatrix} \qquad (6)$$

$$c_D = \rho.(\alpha(N_w-1-P)..\alpha(1-P))^T \qquad (7)$$

Dans ces formules, $N_w$ désigne le nombre de coefficients du filtre de Wiener, (ρ) désigne la puissance du signal et P est un coefficient qui, s'il est positif, est représentatif d'un filtre lisseur et s'il est négatif, représentatif d'un filtre prédicteur.

La détermination des coefficients d'évanouissement $\hat{c}_n$ conformément aux formules (5), (6) et (7), nécessite de connaître les échantillons d'autocorrélation des coefficients du canal, de calculer la fonction d'autocorrélation et d'inverser une matrice.

Or, ceci est trop complexe à mettre en oeuvre. Par ailleurs, en terme de stabilité, le calcul de la fonction d'autocorrélation peut, à cause du rapport signal/bruit, provoquer des instabilités dans l'inversion de la matrice.

C'est pourquoi, l'invention propose tout d'abord d'utiliser une fonction d'autocorrélation supposée connue pour les coefficients d'évanouissement. On peut à cet égard utiliser le modèle de Jake, bien connu de l'homme du métier, qui est le modèle d'autocorrélation généralement adopté en milieu urbain. Plus précisément, dans ce cas, l'autocorrélation $R_c$ du coefficient d'évanouissement $c_l$ associée au $1^{ième}$ trajet, est définie par la formule (7') :

$$R_c\ (r) = \rho_l\ J_o\ (2\pi\ f_d.n) = \rho_l.\alpha\ (n) \qquad (7')$$

Dans cette formule :

$\rho_1$ désigne la puissance du signal issu du $1^{ième}$ trajet associé à ce $1^{ième}$ coefficient,

$J_o$ désigne la fonction de Bessel du premier type d'ordre zéro, et

$f_d$ désigne la fréquence Doppler normalisée qui est égale au produit de la fréquence porteuse (par exemple 2 GHz) par le rapport entre la vitesse de déplacement du téléphone et la vitesse de la lumière.

On remplace alors dans les formules (6) et (7) l'autocorrélation définie par la formule (7') et l'on obtient, pour chaque coefficient d'évanouissement, les formules (8) et (9) dans lesquelles K est égal à $2\pi f_d$.

$$C_D = \rho.\begin{pmatrix} J_0(0) & . & . & J_0(K.(N_w-1)) \\ & . & . & . \\ . & . & . & . \\ . & . & . & . \\ J_0(K.(N_w-1)) & . & . & J_0(0) \end{pmatrix} \qquad (8)$$

$$c_D = \rho.(J_0(K.(N_w-1-P))...J_0(K.(N_w-1-P)))^T \qquad (9)$$

Le filtre de Wiener W est ensuite calculé par la formule (10) :

$$w^H = c_D^H.(C_D + N0.I)^{-1}. \qquad (10)$$

dans laquelle NO désigne un bruit blanc.

L'homme du métier aura par conséquent noté que pour chaque coefficient d'évanouissement, le filtre de Wiener dépend uniquement de la puissance $\rho_1$ du signal issu du trajet associé au coefficient d'évanouissement, et de la vitesse de déplacement du mobile. Il est donc possible de précalculer ces filtres et de les tabuler en fonction de ces deux paramètres (puissance, vitesse).

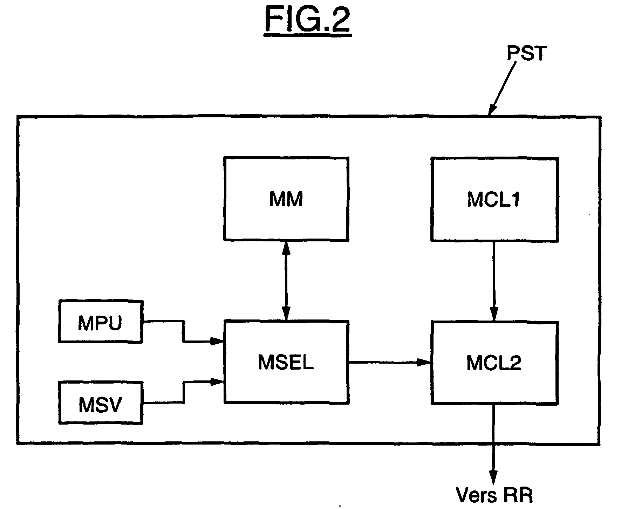

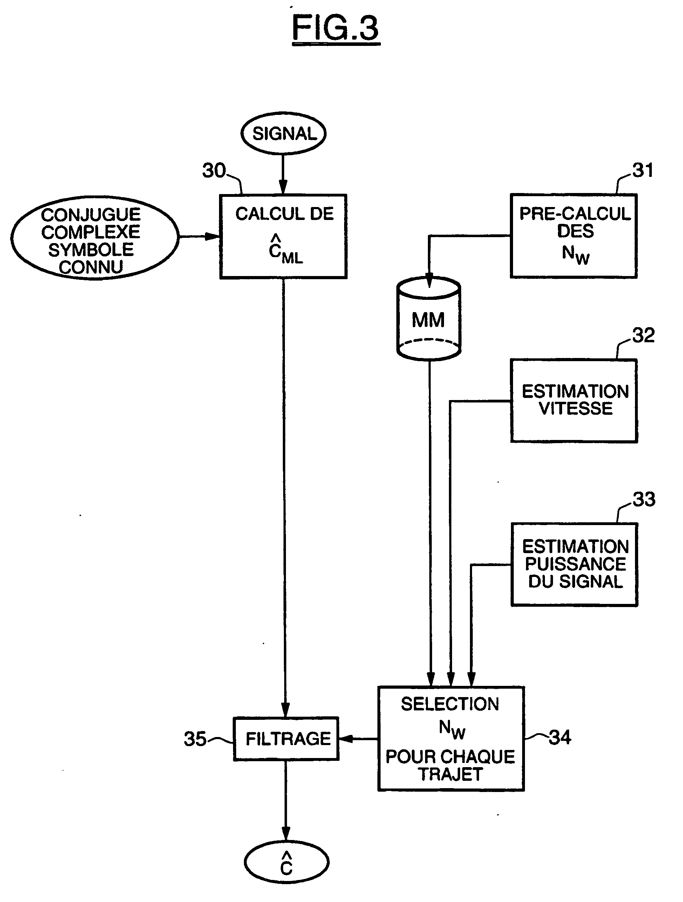

Ceci est effectué dans l'étape 31 (figure 3) et les différents jeux de coefficients $N_w$ des filtres sont stockés dans une mémoire MM du dispositif d'estimation PST (figure 2).

A titre indicatif, on stocke dans la mémoire MM 40 filtres de Wiener différents à 8 coefficients, c'est-à-dire 40 jeux différents de 8 coefficients. Ces jeux sont respectivement précalculés pour 8 vitesses, par exemple 3, 30, 50, 80, 120, 200, 300, 500 km/h et pour 5 valeurs de puissance de signal, par exemple 5, 10, 15, 20 et 25 dB.

Pour la détermination en temps réel des coefficients d'évanouissement des différents trajets du canal, il va par conséquent être nécessaire d'estimer la vitesse de déplacement du mobile d'une part, et la puissance du signal issu de chaque trajet d'autre part.

La puissance est déterminée par des moyens MPU qui sont classiques et de structure connue, un tel paramètre étant classiquement et habituellement déterminé pour d'autres raisons dans un système de communication sans fil.

En ce qui concerne l'estimation de la vitesse de déplacement, celle-ci est effectuée par des moyens d'estimation MSV, mettant en oeuvre toute méthode connue d'estimation de vitesse, par exemple celle décrite dans la demande de brevet français n° 2 782 227, ou encore dans l'article de Chengshan Xiao et autres, intitulé « Mobile Speed Estimation for TDMA-Based Hierarchical Cellular Systems », 1999, IEEE, pages 2456-2460.

A partir de là, des moyens de sélection MSEL vont déterminer, pour chaque coefficient d'évanouissement, c'est-à-dire pour chaque trajet, parmi les 8 vitesses de référence et les 5 valeurs de puissance de signal, celles qui sont les plus proches, par exemple au sens d'une distance euclidienne, de la valeur estimée de la vitesse de déplacement du mobile et de la valeur calculée de la puissance du signal. Les moyens de sélection MSEL extraient alors de la mémoire MM, pour chaque trajet, le jeu de coefficients de Wiener correspondant (étape 34, figure 3).

Par ailleurs, des premiers moyens de calcul MCLI vont déterminer (étape 30) des premières valeurs d'estimation $\hat{c}_{ML}$ des coefficients d'évanouissement au sens du maximum de vraisemblance. A cet égard, ces premières valeurs d'estimation sont obtenues en multipliant les signaux $y_{1:n}$ par le conjugué complexe d'un symbole connu.

Dans l'exemple décrit ici, les symboles connus utilisés sont ceux véhiculés par le canal CPICH.

Par ailleurs, il n'est pas nécessaire de calculer ces premières valeurs d'estimation pour chaque fragment FRG (figure 4) car sur un fragment, l'évanouissement n'évolue pas beaucoup. Aussi, est-il préférable de déterminer ces premières valeurs d'estimation $\hat{c}_{ML}$ sur un certain nombre de fragments de chaque intervalle SLj. En d'autres termes, des moyens d'estimation MST3 vont effectuer cette estimation sur N fragments, par exemple par une moyenne. N peut être par exemple pris égal à 256 ou 512. On utilisera de préférence la valeur 512, ce qui conduit à obtenir 5 valeurs d'estimation par fragment.

Une fois ces premières valeurs d'estimation déterminées, les deuxièmes moyens de calcul MCL2 vont effectuer, pour chaque trajet, le filtrage des premières valeurs d'estimation par le jeu de coefficients présélectionné (étape 35). Ce calcul est effectué conformément à la , formule (4) et permet d'obtenir les coefficients d'évanouissement $\hat{c}$.

D'un point de vue matériel, les moyens MCL1, MCL2, MST3., MSEL, MSU peuvent être par exemple réalisés de façon logicielle au sein d'un processeur, ou bien réalisés directement au sein d'un circuit intégré spécifique (ASIC).

## Revendications

**1.** Procédé de détermination des coefficients d'évanouissement des trajets d'un canal de transmission multi-trajets reliant une station de base et un terminal mobile, procédé qui comprend une détermination de premières valeurs d'estimation ($\hat{c}_{ML}$) desdits coefficients d'évanouissement au sens du maximum de vraisemblance, **caractérisé par le fait qu'**il comprend une mémorisation (MM) de plusieurs jeux de coefficients d'un filtre de Wiener respectivement précalculés pour plusieurs jeux de valeurs prédéterminées différentes de vitesse de déplacement du terminal mobile et de puissance du signal en utilisant une fonction d'autocorrélation supposée connue ($J_o$) des coefficients d'évanouissement, une estimation (MSV, MSU) de la vitesse de déplacement du mobile et de la puissance du signal de chaque trajet, une sélection pour chaque trajet d'un jeu de coefficients précalculés ($N_w$) de filtre de Wiener à partir du résultat de la comparaison entre la vitesse de déplacement puissance du signal estimés d'une part, et les jeux de valeurs prédéterminées de vitesse de déplacement et de puissance de signal d'autre part, et une détermination des coefficients d'évanouissement ($\hat{c}$) obtenue par un filtrage des premières valeurs d'estimation correspondantes ($\hat{c}_{ML}$) utilisant les jeux sélectionnés de coefficients de Wiener précalculés.

**2.** Procédé selon la revendication 1, **caractérisé par le fait que** la fonction d'autocorrélation supposée connue des coefficients d'évanouissement comporte une fonction de Bessel du premier type d'ordre zéro.

**3.** Procédé selon l'une des revendications précédentes, **caractérisé par le fait que** la détermination des premières valeurs d'estimation ($\hat{c}_{ML}$) des coefficients d'évanouissement sont obtenues en multipliant les signaux issus des différents trajets par le conjugué complexe d'un symbole connu.

**4.** Procédé selon l'une des revendications précédentes, **caractérisé par le fait que** les informations véhiculées sur le canal de transmission sont formés de fragments (FRG) et sont véhiculées au sein de trames successives (TRR) subdivisées chacune en un nombre prédéterminé d'intervalles (SLi), et **par le fait que** la détermination des premières valeurs d'estimation des coefficients d'évanouissement comporte une estimation de ces premières valeurs sur un nombre prédéterminé de fragments de chaque intervalle.

**5.** Dispositif d'estimation des coefficients d'évanouissement des trajets d'un canal de transmission multi-trajets reliant une station de base et un terminal mobile, dispositif qui comprend des premiers moyens de calcul (MCL1) aptes à déterminer des premières valeurs d'estimation ($\hat{c}_{ML}$) desdits coefficients d'évanouissement au sens du maximum de vraisemblance, **caractérisé par le fait qu'**il comprend une mémoire (MM) contenant plusieurs jeux de coefficients d'un filtre de Wiener respectivement précalculés pour plusieurs jeux de valeurs prédéterminées différentes de vitesse de déplacement du terminal mobile et de puissance de signal en utilisant une fonction d'autocorrélation supposée connue ($J_o$) des coefficients d'évanouissement, des premiers moyens d'estimation (MSV) aptes à estimer la vitesse de déplacement du mobile, des deuxièmes moyens d'estimation (MSU) aptes à estimer la puissance de signal de chaque trajet, des moyens de sélection (MSEL) aptes à sélectionner pour chaque trajet un jeu de coefficients précalculés ($N_w$) de filtre de Wiener à partir du résultat de la comparaison entre la vitesse de déplacement et la puissance de signal estimés d'une part, et les jeux de valeurs prédéterminées de vitesse de déplacement et de puissance de signal d'autre part, et des deuxièmes moyens de calcul (MCL2) aptes à déterminer les coefficients d'évanouissement ($\hat{c}$) par un filtrage des premières valeurs d'estimation correspondantes ($\hat{c}_{ML}$) utilisant les jeux sélectionnés de coefficients de Wiener précalculés.

6. Dispositif selon la revendication 5, **caractérisé par le fait que** la fonction d'autocorrélation des coefficients d'évanouissement comporte une fonction de Bessel du premier type d'ordre zéro ($J_o$).

7. Dispositif selon l'une des revendications 5 ou 6, **caractérisé par le fait que** les premiers moyens de calcul (MCL1) comportent des moyens de multiplication aptes à multiplier les signaux issus des différents trajets par le conjugué complexe d'un symbole connu.

8. Dispositif selon l'une des revendications 5 à 7, **caractérisé par le fait que** les informations véhiculées sur le canal de transmission sont formés de fragments et sont véhiculées au sein de trames successives subdivisées chacune en un nombre prédéterminé d'intervalles, et **par le fait que** les premiers moyens de calcul (MCL1) comportent des troisièmes moyens d'estimation (MST3) aptes à estimer ces premières valeurs sur un nombre prédéterminé de fragments de chaque intervalle.

9. Terminal mobile, **caractérisé par le fait qu'**il incorpore un dispositif selon l'une des revendications 5 à 8.

10. Terminal mobile selon la revendication 9, **caractérisé par le fait qu'**il constitue un téléphone mobile cellulaire.

**Patentansprüche**

1. Verfahren zur Bestimmung der Schwundkoeffizienten der Wege eines Mehrwegübertragungskanals, der eine Basisstation und eine Mobilstation verbindet, wobei das Verfahren eine Bestimmung erster Schätzwerte ($\hat{c}_{ML}$) der Schwundkoeffizienten im Sinne der maximalen Wahrscheinlichkeit enthält, **dadurch gekennzeichnet, dass** es eine Speicherung (MM) mehrerer Sätze von Koeffizienten eines Wiener-Filters, die je für mehrere Sätze von verschiedenen vorbestimmten Werten der Bewegungsgeschwindigkeit der Mobilstation und der Signalstärke unter Verwendung einer als bekannt angenommenen Autokorrelationsfunktion ($J_0$) der Schwundkoeffizienten vorberechnet werden, eine Schätzung (MSV, MSU) der Bewegungsgeschwindigkeit der Mobilstation und der Signalstärke jedes Wegs, für jeden Weg eine Auswahl eines Satzes von vorberechneten Wiener-Filter-Koeffizienten ($N_w$) ausgehend vom Ergebnis des Vergleichs zwischen der geschätzten Bewegungsgeschwindigkeit und Signalstärke einerseits und den Sätzen von vorbestimmten Bewegungsgeschwindigkeits- und Signalstärkewerten andererseits, und eine Bestimmung der Schwundkoeffizienten ($\hat{c}$) aufweist, die durch eine Filterung der ersten entsprechenden Schätzwerte ($\hat{c}_{ML}$) unter Verwendung der ausgewählten vorberechneten Sätze von Wiener-Koeffizienten erhalten wird.

2. Verfahren nach Anspruch 1, **dadurch gekennzeichnet, dass** die als bekannt angenommene Autokorrelationsfunktion der Schwundkoeffizienten eine Besselfunktion des ersten Typs der Ordnung Null aufweist.

3. Verfahren nach einem der vorhergehenden Ansprüche, **dadurch gekennzeichnet, dass** die Bestimmung der ersten Schätzwerte ($\hat{c}_{ML}$) der Schwundkoeffizienten durch Multiplikation der von den verschiedenen Wegen stammenden Signale mit dem komplexen Konjugat eines bekannten Symbols erhalten wird.

4. Verfahren nach einem der vorhergehenden Ansprüche, **dadurch gekennzeichnet, dass** die auf dem Übertragungskanal übertragenen Informationen von Fragmenten (FRG) gebildet und innerhalb von aufeinanderfolgenden Rahmen (TRR) übertragen werden, die je in eine vorbestimmte Anzahl von Intervallen (SLi) unterteilt sind, und **dadurch**, dass die Bestimmung der ersten Schätzwerte der Schwundkoeffizienten eine Schätzung dieser ersten Werte über eine vorbestimmte Anzahl von Fragmenten jedes Intervalls aufweist.

**5.** Vorrichtung zur Schätzung der Schwundkoeffizienten der Wege eines Mehrwegübertragungskanals, der eine Basisstation und eine Mobilstation verbindet, wobei die Vorrichtung erste Rechenmittel (MCL1) aufweist, die in der Lage sind, erste Schätzwerte ($\hat{c}_{ML}$) der Schwundkoeffizienten im Sinne der maximalen Wahrscheinlichkeit zu bestimmen, **dadurch gekennzeichnet, dass** sie einen Speicher (MM), der mehrere Sätze von Koeffizienten eines Wiener-Filters enthält, die je für mehrere Sätze von verschiedenen vorbestimmten Werten der Bewegungsgeschwindigkeit der Mobilstation und der Signalstärke unter Verwendung einer als bekannt angenommenen Autokorrelationsfunktion ($J_0$) der Schwundkoeffizienten vorberechnet werden, erste Schätzmittel (MSV), die in der Lage sind, die Bewegungsgeschwindigkeit der Mobilstation zu schätzen, zweite Schätzmittel (MSU), die in der Lage sind, die Signalstärke jedes Wegs zu schätzen, Auswahlmittel (MSEL), die in der Lage sind, für jeden Weg einen Satz von vorberechneten Wiener-Filter-Koeffizienten ($N_w$) ausgehend vom Ergebnis des Vergleichs zwischen der geschätzten Bewegungsgeschwindigkeit und Signalstärke einerseits und den Sätzen von vorbestimmten Bewegungsgeschwindigkeits- und Signalstärkewerten andererseits auszuwählen, und zweite Rechenmittel (MCL2) aufweist, die in der Lage sind, die Schwundkoeffizienten ($\hat{c}$) durch eine Filterung der ersten entsprechenden Schätzwerte ($\hat{c}_{ML}$) unter Verwendung der ausgewählten vorberechneten Sätze von Wiener-Koeffizienten zu bestimmen.

**6.** Vorrichtung nach Anspruch 5, **dadurch gekennzeichnet, dass** die Autokorrelationsfunktion der Schwundkoeffizienten eine Besselfunktion des ersten Typs der Ordnung Null ($J_0$) aufweist.

**7.** Vorrichtung nach einem der Ansprüche 5 und 6, **dadurch gekennzeichnet, dass** die ersten Rechenmittel (MCL1) Multiplikationsmittel aufweisen, die in der Lage sind, die von den verschiedenen Wegen stammenden Signale mit dem komplexen Konjugat eines bekannten Symbols zu multiplizieren.

**8.** Vorrichtung nach einem der Ansprüche 5 bis 7, **dadurch gekennzeichnet, dass** die auf dem Übertragungskanal übertragenen Informationen von Fragmenten gebildet und innerhalb von aufeinanderfolgenden Rahmen übertragen werden, die je in eine vorbestimmte Anzahl von Intervallen unterteilt sind, und **dadurch**, dass die ersten Rechenmittel (MCL1) dritte Schätzmittel (MST3) aufweisen, die in der Lage sind, diese ersten Werte über eine vorbestimmte Anzahl von Fragmenten jedes Intervalls zu schätzen.

**9.** Mobilstation, **dadurch gekennzeichnet, dass** sie eine Vorrichtung nach einem der Ansprüche 5 bis 8 aufweist.

**10.** Mobilstation nach Anspruch 9, **dadurch gekennzeichnet, dass** sie ein zellulares Mobiltelefon bildet.

**Claims**

**1.** Method for determining the fading coefficients of paths of a multi-path transmission channel linking a base station and a mobile terminal, method which comprises a determination of first estimation values ($\hat{c}_{ML}$) of the said fading coefficients in the sense of maximum likelihood, **characterized in that** it comprises a storing (MM) of several sets of coefficients of a Wiener filter respectively precalculated for several sets of different predetermined values of speed of movement of the mobile terminal and of power of the signal, using an autocorrelation function that is assumed to be known ($J_o$) of the fading coefficients, an estimation (MSV, MSU) of the speed of movement of the mobile terminal and of the power of the signal of each path, for each path a selection of a set of precalculated Wiener filter coefficients ($N_w$) from the result of the comparison between the estimated speed of movement and power of the signal on the one hand, and the sets of predetermined values of speed of movement and of signal power on the other, and a determination of the fading coefficients ($\hat{c}$) obtained by a filtering of the first corresponding estimation values ($\hat{c}_{ML}$) using the selected sets of precalculated Wiener coefficients.

**2.** Method according to Claim 1, **characterized in that** the autocorrelation function that is assumed to be known of the fading coefficients consists of a Bessel function of the first kind of order zero.

**3.** Method according to one of the preceding claims, **characterized in that** the determination of the first estimation values ($\hat{c}_{ML}$) of the fading coefficients are obtained by multiplying the signals from the various paths by the complex conjugate of a known symbol.

**4.** Method according to one of the preceding claims, **characterized in that** the information conveyed on the transmission channel is made up of chips (FRG) and is conveyed within successive frames (TRR) each subdivided into a predetermined number of slots (SLi) and **in that** the determination of the first estimation values of the fading coefficients consists of an estimation of these first values on a predetermined number of chips of each slot.

5. Device for estimating the fading coefficients of paths of a multi-path transmission channel linking a base station and a mobile terminal, device which comprises first means of calculation (MCL1) suitable for determining the first estimation values ($\hat{c}_{ML}$) of the said fading coefficients in the sense of maximum likelihood, **characterized in that** it comprises a memory (MM) containing several sets of coefficients of a Wiener filter respectively precalculated for several sets of different predetermined values of speed of movement of the mobile terminal and of signal power, using an autocorrelation function that is assumed to be known ($J_o$) of the fading coefficients, first estimation means (MSV) suitable for estimating the speed of movement of the mobile terminal, second estimation means (MSU) suitable for estimating the signal power of each path, selection means (MSEL) suitable for selecting for each path a set of precalculated Wiener filter coefficients ($N_W$) from the result of the comparison between the estimated speed of movement and the signal power on the one hand and the sets of predetermined values of speed of movement and of signal power on the other, and second calculation means (MCL2) suitable for determining the fading coefficients ($\hat{c}$) by a filtering of the first corresponding estimation values ($\hat{c}_{ML}$) using the selected sets of precalculated Wiener coefficients.

6. Device according to Claim 5, **characterized in that** the autocorrelation function of the fading coefficients consists of a Bessel function of the first kind of order zero ($J_o$).

7. Device according to one of Claims 5 and 6, **characterized in that** the first calculation means (MCL1) comprise multiplication means suitable for multiplying the signals from the various paths by the complex conjugate of a known symbol.

8. Device according to one of Claims 5 to 7, **characterized in that** the information conveyed on the transmission channel is made up of chips and is conveyed within successive frames each subdivided into a predetermined number of slots, and **in that** the first calculation means (MCL1) comprise third estimation means (MST3) suitable for estimating these first values on a predetermined number of chips of each slot.

9. Mobile terminal, **characterized in that** it incorporates a device according to one of Claims 5 to 8.

10. Mobile terminal according to Claim 9, **characterized in that** it is a cellular mobile telephone.

## FIG.1

EP 1 296 460 B1

# FIG.2

PST

MM

MCL1

MPU

MSV

MSEL

MCL2

Vers RR

# FIG.3

SIGNAL

CONJUGUE
COMPLEXE
SYMBOLE
CONNU

30 — CALCUL DE
$\hat{C}_{ML}$

31 — PRE-CALCUL
DES
$N_W$

MM

32 — ESTIMATION
VITESSE

33 — ESTIMATION
PUISSANCE
DU SIGNAL

35 — FILTRAGE

SELECTION
$N_W$
POUR CHAQUE
TRAJET — 34

$\hat{C}$

# FIG.4

SLj    FRG    TRR

| SL0 | ----------- | SLi | ----------- | | SL14 |

MUL

MCL1

N FRAGMENTS → MST3

$\hat{C}_{ML}$